# EUROPEAN PATENT APPLICATION

(11) **EP 1 142 483 A1**
(43) Date of publication of application: **10.10.2001**
(21) Application number: 01201251.4
(22) Date of filing: 05.04.2001
(51) Int. Cl.: A23F 5/14

(54) **Coffee package**

(30) Priority: 06.04.2000 NL 1014852
(71) Applicant: Sara Lee/DE N.V., 3532 AA Utrecht (NL)
(72) Inventor: Groen, Hendrik Johannes, 1273 XC Huizen (NL)
(74) Representative: Prins, Adrianus Willem

(57) **Abstract**

The present invention relates to a package containing roasted, ground coffee and at least one absorbent for coffee oil, which absorbent is not water-soluble, and to a method for preparing a portion of liquid coffee with a reduced content of coffee oil, comprising dosing a dose of ground, roasted coffee to a brewing system in which no filtering paper of filtering cloth is used, preparing the coffee by extraction with hot water, the improvement consisting in the dose of coffee containing an amount of absorbent for coffee oil which is effective for reducing the content of coffee oil in the prepared coffee.

## Description

The present invention relates to the preparation of coffee and more in particular to the preparation of coffee in a manner whereby the content of coffee oil in the end product is reduced.

It is known that coffee oil is present in coffee. When making coffee by contacting hot water with coffee, a part of this coffee oil is also extracted and ends up in the eventual coffee. There is a need to reduce the content of coffee oil in the extract, inter alia for esthetic reasons. Further, it is known that many factors have an influence on the content of coffee oil, inter alia the specific composition of the coffee mixture and the time and intensity of roasting. U.S. Patent 4,859,348 relates to a filtering device suitable for removing the coffee oil during coffee brewing. According to this patent, a special woven is used for retaining the coffee oil, so that it does not end up in the brew.

U.S. Patent 5,496,573 also relates to the use of a special coffee filtering material, which involves a nonwoven having special properties.

Although in this manner coffee oil can be separated so that it does not end up in the brew, these solutions require the application of a coffee filter. For use in apparatuses in which no filtering paper is used, for instance in coffee machines for use in offices; canteens and the like, this is not possible. In this type of apparatus, use is often made of a stainless steel filter which is wiped clean after use. In this type of apparatus, the proposed solutions are therefore not usable.

Therefore, there is a need for an alternative manner for removing coffee oil, which is suitable for use in filtering-paperless coffee machines. Surprisingly, it has been found that, in a very simple manner, it is possible to prevent the coffee oil from ending up in the brew, or to reduce the proportion of the coffee oil ending up in the brew. In fact, it has been found that when an absorbent for coffee oil is mixed with the roasted and ground coffee, and subsequently, from this mixture, a brew is prepared, the content of coffee oil is clearly reduced. Therefore, in a first embodiment, the invention relates to a package containing roasted, ground coffee and at least one absorbent for coffee oil, which absorbent oil is not water-soluble.

When, therefore, a brew is prepared from the mixture from this package according to the invention, a clear reduction of the content of coffee oil occurs.

As an absorbent, a multitude of materials are eligible. Firstly, it is preferred that the absorbent is hydrophobic, i.e. lipophilic. Then, on the one hand, a preferential absorption of coffee oil occurs, while, on the other hand, the hydrophilic odour and flavour components have a lesser tendency to be absorbed. Suitable absorbents are, for instance, filtering paper, modified or unmodified zeolites, clay materials, diatomaceous earth, melt blown PP, cellulose fibre, cotton fibre, glass wool and mineral wool. It is essential for the absorbent not to be water-soluble.

It is noted that the action of the absorbent is not entirely clear. It is possible that the coffee oil is absorbed into the absorbent, but it can also be that it adheres to the surface.

Preferably, the absorbent is finely divided, so it can easily be mixed with the ground coffee and does not segregate too strongly during brewing. In case a particulate absorbent is used, it is therefore preferred that the grain size is comparable to the grain size of the ground coffee. When using filtering paper or like materials, this requirement is not so stringent, but it is preferred that the paper is reasonably finely shredded.

Surprisingly, it has further appeared that the use of absorbents which also absorb water, such as filtering paper, has the advantage that the coffee grounds which are left after extraction show a better removability. If so desired, combinations of absorbents can also be used, such as diatomaceous earth and filtering paper.

As already indicated, the invention has, in particular, advantages when used in filtering-paperless brewing systems. Therefore, the invention also relates to a method for preparing a portion of liquid coffee with a reduced content of coffee oil, comprising dosing a dose of ground, roasted coffee to a brewing system in which no filtering paper or filtering cloth is used, preparing the coffee by extraction with hot water, the improvement consisting in the dose of coffee containing an amount of absorbent for coffee oil, which amount is effective for reducing the content of coffee oil in the prepared coffee.

The invention is presently elucidated in and by a few examples, without being limited thereto.

### Examples

### Example 1 (comparative)

In a coffee machine, coffee is prepared from 52 grams of coffee with 1 litre of hot water at an excess pressure of 1.5 bars.

In the captured brew with a dry matter content of 1.5% by weight, approximately 400 mg/l coffee oil is present.

### Example 2

Example 1 is repeated, with the coffee additionally containing 8 grams of shredded filtering paper.

In the captured brew with a dry matter content of 1.5% by weight, approximately 300 mg/l coffee oil is present.

### Example 3

Example 1 is repeated, with the coffee additionally containing 8 grams of Celite (diatomaceous earth).

In the captured brew with a dry matter content of 1.5% by weight, approximately 200 mg/l coffee oil is present.

## Claims

1. A package containing roasted, ground coffee and at least one absorbent for coffee oil, which absorbent is not water-soluble.

2. A package according to claim 1, wherein the absorbent is a lipophilic material.

3. A package according to claim 2, wherein the absorbent is selected from the group consisting of filtering paper, modified or unmodified zeolites, clay materials, diatomaceous earth, melt blown PP, cellulose fibre, cotton fibre, glass wool and rock wool.

4. A package according to claim 3, wherein the absorbent is finely divided filtering paper.

5. A package according to claims 1 - 4, wherein the coffee is suitable for use in filtering paper-free and filtering cloth-free brewing systems.

6. A package according to claims 1 - 5, wherein the coffee is destined for use in filtering paper-free and filtering cloth-free brewing systems.

7. A method for preparing a portion of liquid coffee with a reduced content of coffee oil, comprising dosing a dose of ground, roasted coffee to a brewing system in which no filtering paper or filtering-cloth is used, preparing the coffee by extraction with hot water, the improvement consisting in the dose of coffee containing an amount of absorbent for coffee oil, which amount is effective for reducing the content of coffee oil in the prepared coffee.

8. A method for preparing a portion of liquid coffee with a reduced content of coffee oil, wherein the coffee is prepared by using the coffee from a package according to claims 1 - 6.

9. A method for preparing a portion of liquid coffee with a reduced content of coffee oil, wherein the coffee is prepared by using a combination of roasted, ground coffee and at least one absorbent for coffee oil, which absorbent is not water-soluble.

10. The use of a non-water-soluble absorbent for coffee oil in a mixture with ground and roasted coffee for reducing the content of coffee oil in a coffee brew.
